# EUROPEAN PATENT APPLICATION

(11) **EP 2 058 768 A1**
(43) Date of publication of application: **13.05.2009**
(21) Application number: 07741202.1
(22) Date of filing: 06.04.2007
(51) Int. Cl.: G06T 17/40, G06F 3/048, G06F 17/30

(54) **IMAGE VIEWER, IMAGE DISPLAYING METHOD AND INFORMATION STORAGE MEDIUM**

(30) Priority: 30.08.2006 JP 2006233751
(71) Applicant: Sony Computer Entertainment Inc., Minato-ku Tokyo 107-0062 (JP)
(72) Inventor: TSUDA, Munetaka, Minato-ku Tokyo 107-0062 (JP); SATO, Koichi, Minato-ku Tokyo 107-0062 (JP)
(74) Representative: Müller - Hoffmann & Partner
(86) International application number: PCT/JP2007/057766
(87) International publication number: WO 2008/026342

(57) **Abstract**

To provide an image viewer, an image display method, and an information storage medium for displaying a plurality of images while distinctively presenting the groups to which the images belong. Based on the number of images belonging to the respective groups, one or more motion data associated with the respective groups are selectively read from the motion data storage means. Then, for every group, an image belonging to that group is mapped as a texture onto a photo object (50) of which motion is described by the one or more motion data associated with that group, and the photo object (50) having the texture mapped thereon is dropped, according to the one or more motion data, from a position defined for that group, the positions being defined for each of the groups so as to be apart from one another, and an image of that situation is shown on the monitor.

## Description

### TECHNICAL FIELD

The present invention relates to an image viewer, an image display method, and an information storage medium.

### BACKGROUND ART

In recent years, people have an enormous number of images, including those captured using a digital camera and/or obtained via the Internet and so forth, and various computer software for efficiently viewing such images are available. For example, according to software for displaying an image of a picture obtained by viewing a virtual three dimensional space where many images are placed, from a certain viewpoint, the user can operate so as to show many images in a list format. Also, according to software for sequentially displaying many images every few seconds, the user can view many images without the need to operate a computer.

### DISCLOSURE OF THE INVENTION

### Problems to be solved by the invention

The images can be grouped based on an attribute thereof, such as an image capturing date and so forth, and displaying the images for every group helps in showing many images in a readily recognizable manner. Regarding this point, according to conventional software, many images are placed in a virtual three dimensional space based on the similarity thereof or in the order of image capturing dates and so forth. However, there is no conventional software available which shows many images while distinctively presenting the groups to which the images belong.

The present invention has been conceived in view of the above, and aims to provide an image viewer, an image display method, and an information storage medium for displaying a plurality of images while distinctively presenting the groups to which the images belong.

### Means for solving the Problem

In order to address the above-described problem, according to one aspect of the present invention, there is provided an image viewer, comprising image obtaining means for obtaining a plurality of images which are display targets; grouping means for grouping the plurality of images into one or more groups; grouped image number obtaining means for obtaining the number of images belonging to each of the groups into which the images are grouped by the grouping means; motion data storage means for storing a plurality of motion data in association with respective different numbers of images, in which each motion data item describes motion of one or more three dimensional models in the virtual three dimensional model, onto which an image associated with the number of images associated with that motion data item is able to be mapped as a texture; motion data reading means for selectively reading, based on the number of images belonging to each of the groups into which the images are grouped by the grouping means, one or more motion data associated with that group from the motion data storage means; and three dimensional image displaying means for mapping, as a texture, for every group into which the images are grouped by the grouping means, an image belonging to that group onto the three dimensional model of which motion is described by the one or more motion data associated with that group, then moving the three dimensional model having the texture mapped thereon to a position defined for that group in the virtual three dimensional space, the positions being defined for each of the respective groups so as to be apart from one another, and displaying an image of the three dimensional model.

According to another aspect of the present invention, there is provided an image display method comprising an image obtaining step of obtaining a plurality of images which are display targets; a grouping step of grouping the plurality of images into one or more groups; a grouped image number obtaining step of obtaining the number of images belonging to each of the groups into which the images are grouped at the grouping step; a motion data reading step of selectively reading, based on the number of images belonging to each of the groups into which the images are grouped at the grouping step, one or more motion data associated with that group from motion data storage means for storing a plurality of motion data in association with respective different numbers of images, in which each motion data item describes motion of one or more three dimensional models in the virtual three dimensional model, onto which an image associated with the number of images associated with that motion data item is able to be mapped as a texture; and a three dimensional image displaying step of mapping, as a texture, for every group into which the images are grouped at the grouping step, an image belonging to that group onto the three dimensional model of which motion is described by the one or more motion data associated with that group, then moving the three dimensional model having the texture mapped thereon to a position defined for that group in the virtual three dimensional space, the positions being defined for each of the respective groups so as to be apart from one another, and displaying an image of the three dimensional model.

According to still another aspect of the present invention, there is provided an information storage medium storing a program for causing a computer to function as image obtaining means for obtaining a plurality of images which are display targets; grouping means for grouping the plurality of images into one or more groups; grouped image number obtaining means for obtaining the number of images belonging to each of the groups into which the images are grouped by the grouping means; motion data storage means for storing a plurality of motion data in association with respective different numbers of images, in which each motion data item describes motion of one or more three dimensional models in the virtual three dimensional model, onto which an image associated with the number of images associated with that motion data item is able to be mapped as a texture; motion data reading means for selectively reading, based on the number of images belonging to each of the groups into which the images are grouped by the grouping means, one or more motion data associated with that group from the motion data storage means; and three dimensional image displaying means for mapping, as a texture, for every group into which the images are grouped by the grouping means, an image belonging to that group onto the three dimensional model of which motion is described by the one or more motion data associated with that group, then moving the three dimensional model having the texture mapped thereon to a position defined for that group in the virtual three dimensional space, the positions being defined for each of the respective groups so as to be apart from one another, and displaying an image of the three dimensional model. The program may be stored in a computer readable information storage medium.

### BRIEF DESCRIPTION OF DRAWINGS

Fig. 1 is a diagram showing a hardware structure of an entertainment system according to an embodiment of the present invention;
Fig. 2 is a diagram showing a structure of an MPU;
Fig. 3 is a diagram showing one example of a display screen of a monitor;
Fig. 4 is a perspective view showing the entire image of a virtual three dimensional space;
Fig. 5 is a diagram explaining about a situation in which photo objects are sequentially falling according to motion data;
Fig. 6 is a functional block diagram of the entertainment system which operates as an image viewer;
Fig. 7 is a diagram schematically showing the content stored in a model data and motion data storage unit;
Fig. 8 is a diagram showing a table for use in determining a mapping destination of each image;
Fig. 9 is a diagram showing a modified example of a table for use in determining a mapping destination of each image;
Fig. 10 is an operational flowchart of the entertainment system which operates as an image viewer; and
Fig. 11 is a diagram showing another example of a display screen of the monitor.

### BEST MODE FOR CARRYING OUT THE INVENTION

In the following, one embodiment of the present invention will be described in detail with reference to the accompanying drawings.

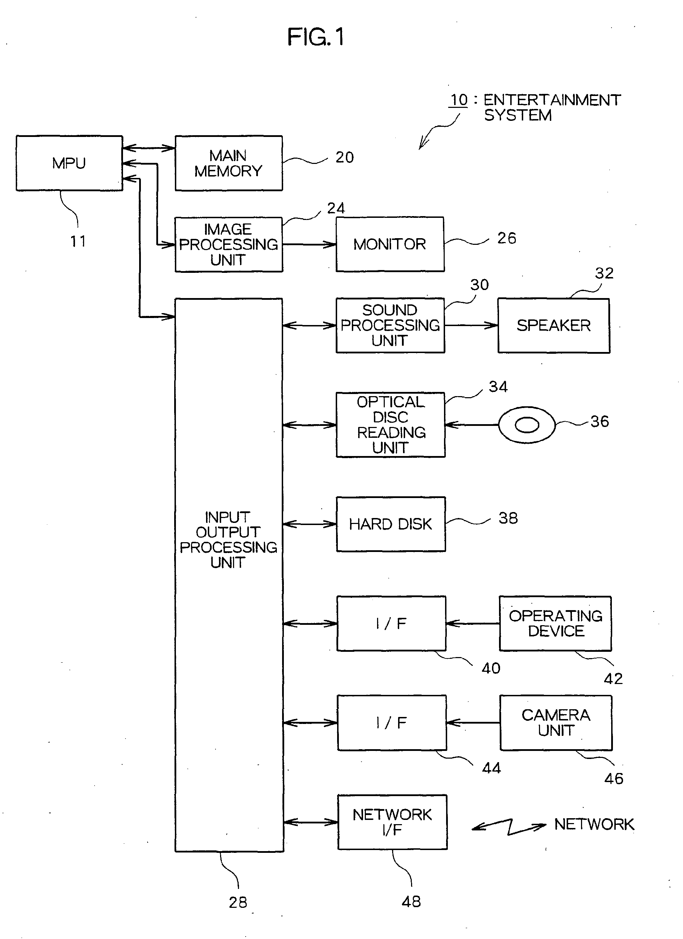

Fig. 1 is a diagram showing a hardware structure of an entertainment system (an image processing device) according to this embodiment. As shown in the drawing, the entertainment system 10 is a computer system comprising an MPU (Micro Processing Unit) 11, a main memory 20, an image processing unit 24, a monitor 26, an input output processing unit 28, a sound processing unit 30, a speaker 32, an optical disc reading unit 34, an optical disc 36, a hard disk 38, interfaces (I/F) 40, 44, an operating device 42, a camera unit 46, and a network interface 48.

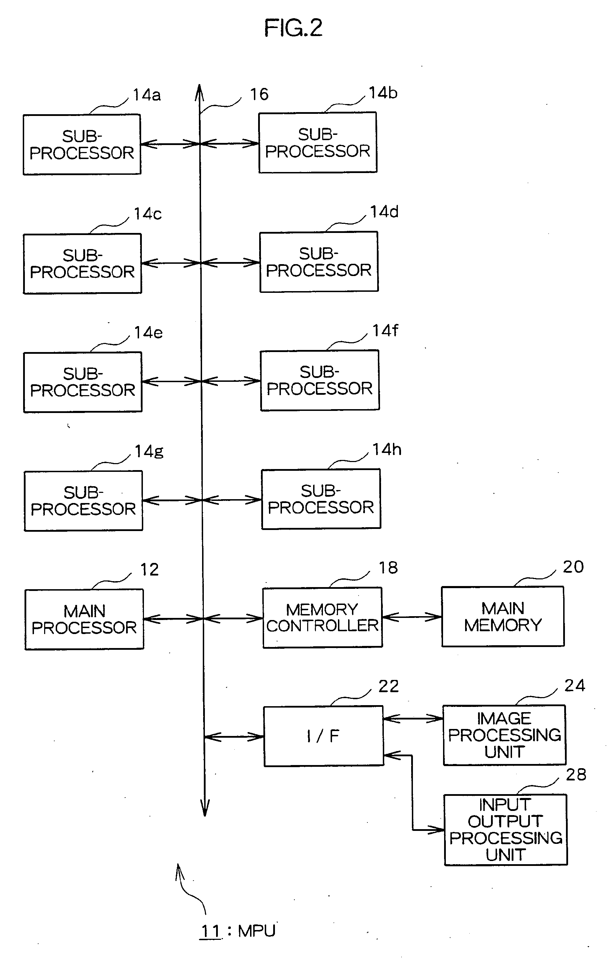

Fig. 2 is a diagram showing a structure of the MPU 11 (program executing means). As shown in the drawing, the MPU 11 comprises a main processor 12, sub-processors 14a, 14b, 14c, 14d, 14e, 14f, 14g, 14h, a bus 16, a memory controller 18, and an interface (I/F) 22.

The main processor 12 carries out various information processing and controls the sub-processors 14a to 14h based on an operating system stored in a ROM (Read Only Memory) (not shown), a program and data read from an optical disc 36, such as a DVD (Digital Versatile Disk)-ROM and so forth, for example, and those supplied via a communication network and so forth.

The sub-processors 14a to 14h carry out various information processing according to an instruction from the main processor 12, and control the respective units of the entertainment system 10 based on a program and data read from the optical disc 36, such as a DVD-ROM and so forth, for example, and those supplied via a communication network and so forth.

The bus 16 is used for exchanging an address and data among the respective units of the entertainment system 10. The main processor 12, sub-processors 14a to 14h, the memory controller 18, and the interface 22 are mutually connected via the bus 16 for data exchange.

The memory controller 18 accesses the main memory 20 according to an instruction from the main processor 12 and the sub-processors 14a to 14h. A program and data read from the optical disc 36 and/or the hard disk 38, and those supplied via a communication network, are written into the main memory 20 when necessary. The main memory 20 is used as a working memory of the main processor 12 and the sub-processors 14a to 14h.

The image processing unit 24 and the input output processing unit 28 are connected to the interface 22. Data exchange between the main processor 12 and sub-processors 14a to 14h and the image processing unit 24 or input output processing unit 28 is carried out via the interface 22.

The image processing unit 24 comprises a GPU (Graphical Processing Unit) and a frame buffer. The GPU renders various screen images into the frame buffer based on the image data supplied from the main processor 12 and/or the sub-processors 14a to 14h. A screen image rendered in the frame buffer, that is, a screen image showing the result of execution by the MPU 11, is converted into a video signal at a predetermined timing before being output to the monitor 26. It should be noted that the monitor 26 may be a home-use television set receiver, for example.

The input output processing unit 28 is connected to the sound processing unit 30, the optical disc reading unit 34, the hard disk 38, and the interfaces 40, 44. The input output processing unit 28 controls data exchange between the main processor 12 and sub-processors 14a to 14h and the sound processing unit 30, optical disc reading unit 34, hard disk 38, interfaces 40, 44, and network interface 48.

The sound processing unit 30 comprises an SPU (Sound Processing Unit) and a sound buffer. The sound buffer stores various kinds of sound data, such as game music, game sound effects, a message, and so forth, read from the optical disc 36 and/or the hard disk 38. The SPU reproduces the various kinds of sound data and outputs via the speaker 32. It should be noted that the speaker 32 may be a built-in speaker of a home-use television set receiver, for example.

The optical disc reading unit 34 reads a program and data recorded in the optical disc 36 according to an instruction from the main processor 12 and/or the sub-processors 14a to 14h. It should be noted that the entertainment system 10 may be formed capable of reading a program and data stored in a computer readable information storage medium other than the optical disc 36.

The optical disc 36 is a general optical disc (a computer readable information storage medium), such as a DVD-ROM or the like, for example. The hard disk 38 is a general hard disk device. Various programs and data are recorded in the optical disc 36 and the hard disk 38 in a computer readable manner.

The interfaces (I/F) 40, 44 are used for connecting various peripheral devices, such as the operating device 42, the camera unit 46, and so forth. Such an interface may be a USB (Universal Serial Bus) interface, for example.

The operating device 42 serves as a general purpose operation input means for use by the user to input various operations (game operation, for example). The input output processing unit 28 obtains the states of the respective units of the operating device 42 through radio or wired communication every predetermined period of time (1/60^{th} of a second, for example) from the operating device 42, and supplies an operational signal describing the states obtained to the main processor 12 and the sub-processors 14a to 14h. The main processor 12 and the sub-processors 14a to 14h determine the content of an operation carried out by the user, based on the operational signal. It should be noted that the entertainment system 10 is formed adapted for connection to a plurality of operating devices 42 for communication, and the main processor 12 and the sub-processors 14a to 14h carry out various processes based on operation signals input from the respective operating devices 42.

The camera unit 46 comprises a publicly known digital camera, for example, and inputs a captured black/white or grey-scale or color image every predetermined period of time (1/60^{th} of a second, for example). The camera unit 46 in this embodiment inputs a captured image as image data in the JPEG (Joint Photographic Experts Group) format. The camera unit 46 is placed on the monitor 26, having the lens thereof directed to the player, for example, and connected via a cable to the interface 44. The network interface 48 is connected to the input output processing unit 28 and a communication network, such as the Internet or the like, to relay data communication made by the entertainment system 10 via the communication network to another computer system, such as another entertainment system 10 and so forth.

The operating device 42, formed as a portable small computer having a wired communication means, such as a USB and so forth, and a radio communication means, such as Blue Tooth (trademark), wireless LAN, and so forth, is used by the user to operate the entertainment system 10. Operation data describing the content of an operation carried out by the user using the operating device 42 is sent to the entertainment system 10 by means of wired or radio.

In the following, a technique for causing the entertainment system 10 having the above-described hardware structure to operate as an image browser which automatically displays many images will be described.

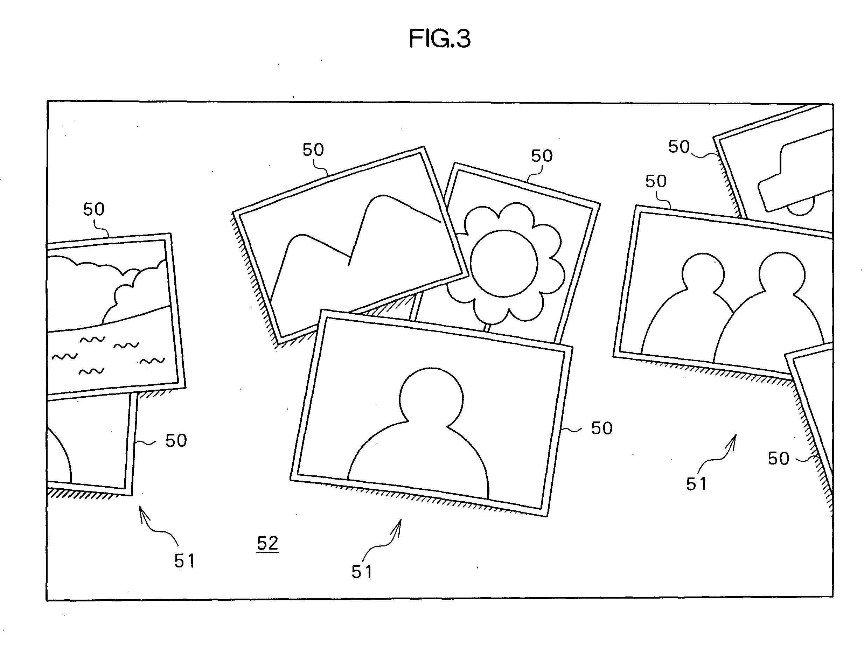

Fig. 3 is a diagram showing one example of a screen image shown on the monitor 26 of the entertainment system 106 operating as an image browser. The shown screen image is visualization of a virtual three dimensional space. Specifically, a picture obtained by viewing a virtual three dimensional space from a viewpoint which moves in the virtual three dimensional space is visualized as an image on a real time basis, using a known three dimensional computer graphic technique, to produce a screen image to be shown on the monitor 26, in which many photo objects 50, or virtual three dimensional models, each representative of an L-sized white-rimmed picture, for example, are placed in the virtual three dimensional space. As shown in the drawing, in the virtual three dimensional space, the photo objects 50 are placed together for every group 51 on the table object 52, or a virtual three dimensional model representative of a table. In creation of the screen image shown in Fig. 3, shading and shadowing techniques are applied to draw a shadow in the portion corresponding to below each photo object 50, whereby the state of the photo object 50 being bent is expressed.

Each of the three dimensional models is formed using a polygon. A photo image owned by the user, such as one captured using a digital camera or obtained via the Internet, for example, is mapped as a texture onto each photo object 50. In the above, images having a common attribute, such as the same image capturing date and so forth, for example, are mapped as textures onto the photo objects 50 belonging to the same group 51. The surface of the table object 52 is shown monochrome, such as white, black, and so forth, so that the photographic objects 50 placed thereon can be readily distinguished.

The photo objects 50 belonging to each group 51 are placed so as to appear partially overlapping with at least one of the other photo objects 50 belonging to the same group 51 when viewed from the viewpoint. This makes it easier for the user to recognize which photo object 50 belongs to which photo group 51.

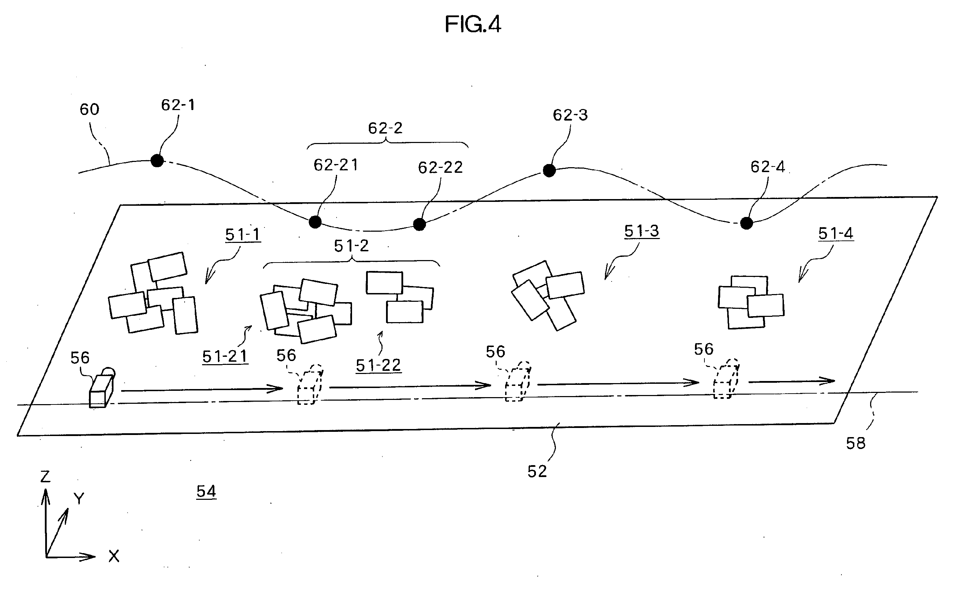

Fig. 4 is a perspective view showing the entire image of the above-described virtual three dimensional space. The shown virtual three dimensional space 54 is virtually created in the main memory 20 of the entertainment system 10. Specifically, six photo objects 50 belonging to the group 51-1, nine photo objects 50 belonging to the group 51-2, four photo objects 50 belonging to the group 51-3, and four photo objects 50 belonging to the group 51-4 are placed on a vast plane table object 52 such that the respective groups are located apart from one another. The respective groups 51 are arranged in substantially the same direction on the table object 52. For the group 51-2, the nine photo objects 50 belonging to that group 51-2, which are relatively many, are placed in two groups, namely, the sub-group 51-21 containing six photo objects 50 and the sub-group 51-22 containing three photo objects 50, which is placed apart from the group 51-21.

A viewpoint orbit 58 is defined above the table object 52, on which a viewpoint 56 (invisible) is defined such that the sight line direction thereof is directed toward the photo object 50. In the entertainment system 10, an image showing a picture obtained by viewing from the viewpoint 56 in the sight line direction is produced on a real time basis, that is, every predetermined period of time (1/60^{th} of a second, for example), and shown on the monitor 26. Also, in the entertainment system 10, the viewpoint 56 is moved in a constant direction along the viewpoint orbit 58 at a constant speed as time passes, like the arrow horizontally directed in the drawing, so that all of the photo objects 50 belonging to the respective groups 51 placed on the table object 52 are shown on the monitor 26. It should be noted that the moving speed of the viewpoint 56 may be dynamically changed depending on the number of photo objects 50 placed in the space in a predetermined size, defined in front of the viewpoint 56.

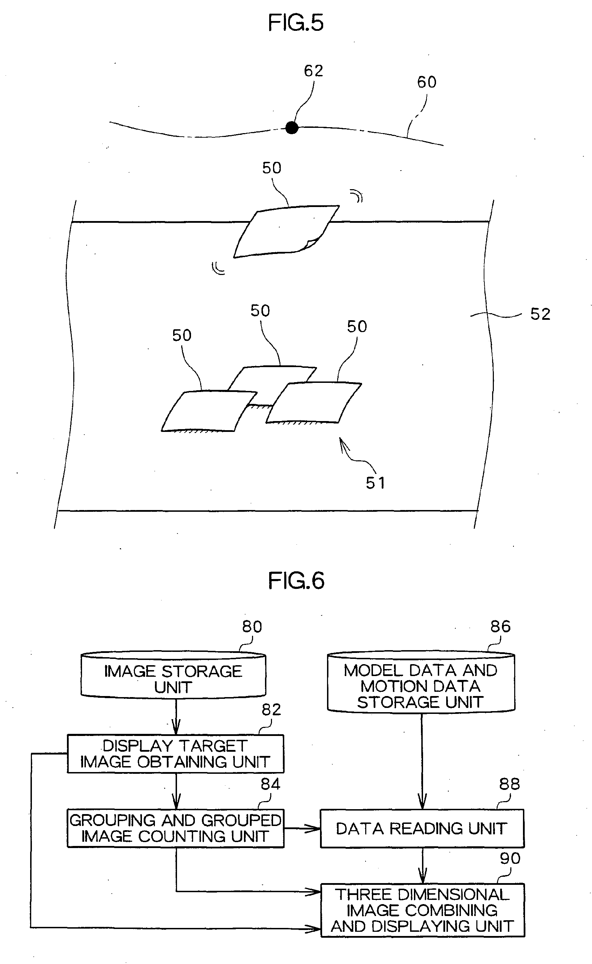

Above the respective groups 51 are defined drop reference positions 62-1 to 62-4, or reference positions for dropping the photo object 50 toward the table object 52. The drop reference positions 62 are located apart from one another on a drop line 60 defined in advance above the table object 52. The drop line 60 may be dynamically produced based on a random number, so that the user can enjoy the image of the photo object 50 dropping from an unexpected position. The interval between the drop reference positions 62 on the drop line 60 may be either constant or dynamically changed depending on the number of photo objects 50 to be dropped and so forth. As shown in Fig. 5, the drop line 60 is defined above the table object 52, and a predetermined number of photo objects 50 are sequentially dropped within the virtual three dimensional space 54 according to predetermined motion data, using the drop reference position 62, or one point on the drop line 60, as a reference. Accordingly, the predetermined number of falling photo objects 50 land and are placed on the table object 52 while partially overlapping with one another. This process is visualized as an image on a real time basis, and shown on the monitor 26. In the above, in the entertainment system 10, with the viewpoint 56 having been moved to near a certain drop reference position 62, the photo object 50 belonging to the group 51 associated with that drop reference position 62 begins falling toward the table object 52. With the above, a picture in which the photo objects 50 belonging to the respective groups 51 are sequentially dropping as the viewpoint 56 moves can be displayed on the monitor 26 on a real time basis.

Fig. 6 is a functional block diagram of the entertainment system 10 operating as an image browser. As shown in the drawing, the entertainment system 10 comprises, in terms of function, an image storage unit 80, a display target image obtaining unit 82, a grouping and grouped image counting unit 84, a model data and motion data storage unit 86, a data reading unit 88, and a three dimensional image combining and displaying unit 90. These functions are realized by the MPU 11 by executing an image browser program recorded in the optical disc 36. Obviously, some or all of the above-described functions may be realized by means of hardware.

The image storage unit 80 is formed using the hard disk 38 as a main component, and stores many still images captured by the user using a digital camera or downloaded from a site on the Internet via the network interface 48. An image captured using a digital camera is read directly from the digital camera or from a portable storage medium removed from the digital camera via an interface (not shown) connected to the input output processing unit 28 of the entertainment system 10. It should be noted that the image storage unit 80 additionally stores attribute information such as an image size, an image capturing time and date, a comment, and so forth of each image.

The display target image obtaining unit 82 obtains a plurality of images, or display targets, from among many images stored in the image storage unit 80 according to an instruction made by the user using the operating device 42, for example.

The grouping and grouped image counting unit 84 groups a plurality of images obtained by the display target image obtaining unit 82 according to the attribute information thereof into one or more groups 51, and obtains the number of images belonging to the respective groups 51. For example, the grouping and grouped image counting unit 84 groups the images according to the image capturing times and dates thereof so that images captured on the same day are grouped into the same group 51.

The model data and motion data storage unit 86 stores a plurality of data sets, each including model data and motion data, in association with different numbers of images. The model data describes the shape of one or more photo objects 50, and the motion data describes motion of the photo object 50. Specifically, the motion data associated with each number of images describes the motion of one or more photo objects 50 in the virtual three dimensional space, onto which that number of image/images can be mapped as a texture/textures.

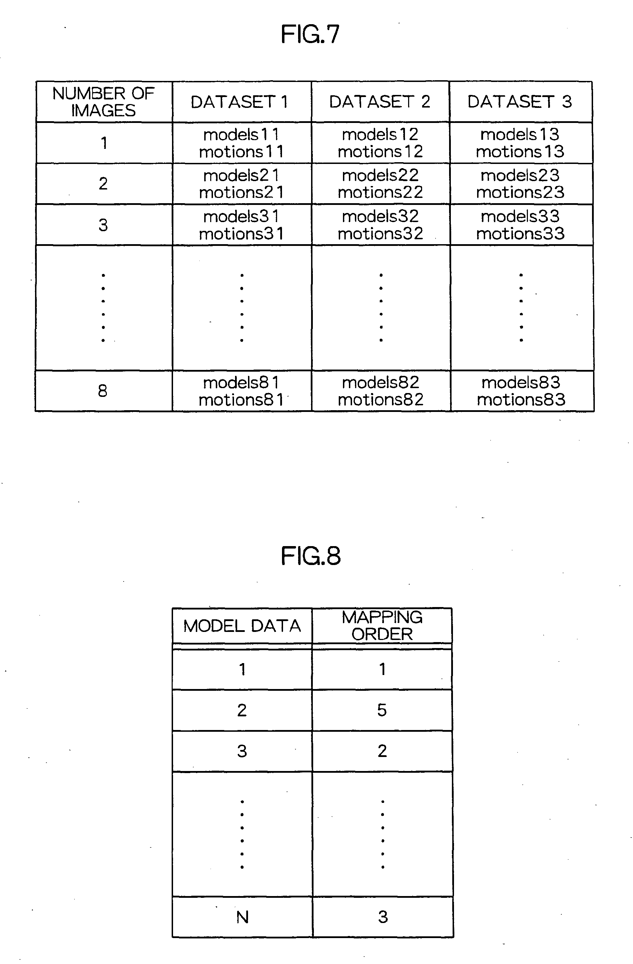

In the above, as shown in Fig. 7, the model data and motion data storage unit 86 stores three sets of model data and motion data in association with the respective numbers of images, namely, one to eight. The model data associated with each number of images describes the shapes of that number of photo objects 50, and the motion data describes the motion of the photo objects 50. That is, a plurality kinds of motion data is stored in association with the respective numbers of images.

Based on the numbers of the images belonging to the respective groups 51, obtained by the grouping and grouped image counting unit 84, the data reading unit 88 selectively reads one or more data sets associated with the respective groups 51 from the model data and motion data storage unit 86. In the above, the data reading unit 88 selects one or more data sets associated with each group 51 such that the total number of images associated with the selected data sets associated with that group 51 amounts to the same as the number of images belonging to that group 51. In the above, where data sets are stored in association with the respective numbers of images, namely, one to eight, with respect to a group 51 containing any of one to eight images, model data and motion data associated with that number is read, and with respect to a group 51 containing nine or more images, two data sets, namely, one associated with three and another associated with six, for example, are read.

Further, the data reading unit 88 reads the motion data associated with the respective groups 51 selectively one by one according to a random number, for example, from among the plurality kinds of motion data stored in the model data and motion data storage unit 86. Then, the photo object 50 is moved according to the thus read motion data. With this arrangement, the photo objects 50 resultantly move differently for every group even though the respective groups contain the same numbers of photo objects 50. This enables more natural displaying of images.

For every group 51 grouped by the grouping and grouped image counting unit 84, the three dimensional image combining and displaying unit 90 maps an image belonging to that group as a texture onto the photo object 50 associated with that group 51.

In the above, which image is to be mapped onto which image may be determined according to various criteria. For example, mapping orders may be set in advance with the respective model data in the model data and motion data storage unit 86, as shown in Fig. 8, while priority orders may be set in advance with the respective images belonging to the respective groups 51 based on the image size and/or the number and/or size of the face shown in each image, which is obtained by means of a publicly known face recognition process, so that an image having a higher priority order may be mapped onto a photo object 50 associated with model data having a higher mapping order. The mapping order of motion data is desirably determined based on the size of the photo object 50 associated with that model data, the distance between the viewpoint 56 and that photo object 50 placed on the table object 52, and/or an extent by which that photo object 50 is hidden by another photo object 50. With the above, a larger-sized image, an image showing a larger face, an image showing many faces, and so forth, can be mapped prior to other images onto an outstanding photo object 50.

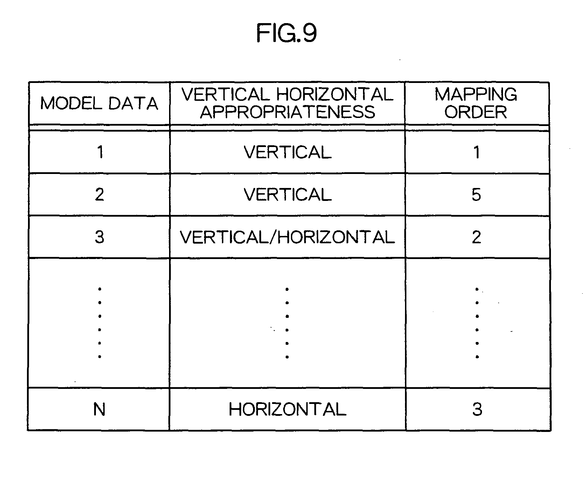

Alternatively, as shown in Fig. 9, a mapping order and vertical and horizontal appropriateness may be set in advance with respect to the respective model data. Vertical and horizontal appropriateness is information telling which of a horizontally long image or a vertically long image is better to be mapped onto a photo object 50 associated with each model data or whether either will do, and may be determined based on the orientation of the photo object 50 placed on the table object 52. An image belonging to each group 51 is mapped according to the priority order thereof onto the photo object 50 having a higher priority order or a more suitable aspect ratio. With the above, a horizontally long image is mapped onto a horizontally oriented photo object 50 placed on the table object 52 prior to another photo object 50, and a vertically long image is mapped onto a vertically oriented photo object 50 placed on the table object 52 prior to another photo object 50.

Thereafter, the three dimensional image combining and displaying unit 90 moves the photo object 50 having a texture mapped thereon according to the motion data associated with the concerned group 51, using the drop reference positions 62 associated with that group 51 as a reference, then produces a screen image depicting that situation, and displays on the monitor 26.

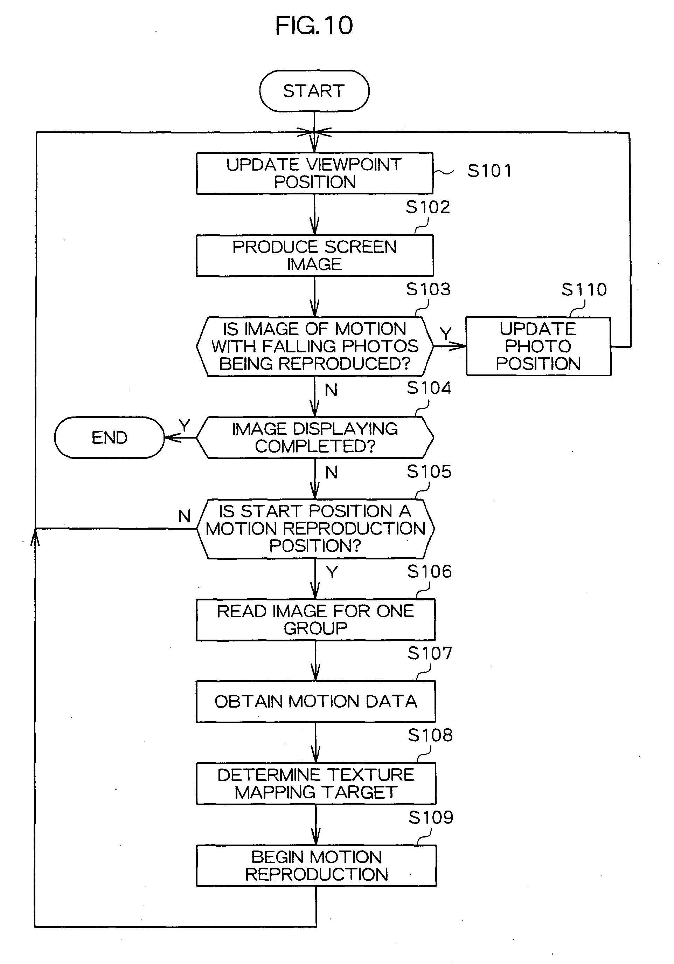

Fig. 10 is an operational flowchart for the entertainment system 10 which operates as an image viewer. The process shown in Fig. 10 is carried out after the display target image obtaining unit 82 obtains display target images and the obtained images are grouped. Specifically, the three dimensional image combining and displaying unit 90 updates the position of the viewpoint 56 in the virtual three dimensional space 54 (S101). In the above, if the viewpoint 56 is yet to be set, the viewpoint 56 is set in the initial position. Thereafter, the three dimensional image combining and displaying unit 90 produces an image showing a picture obtained by viewing from the viewpoint 56 in the sight line direction (S102), and the produced image is shown on the monitor 126 at a predetermined time. Thereafter, the three dimensional image combining and displaying unit 90 determines whether or not an image showing the motion of the photo object 50 being dropped onto the table object 52 is being reproduced (S103). When it is determined that such an image is not being reproduced, it is then determined whether or not display of all images obtained by the display target image obtaining unit 82 is completed (S104). When it is determined that such display is completed, the process by the image viewer is finished.

Meanwhile, when it is determined that display of all images is yet to be finished, it is then determined whether or not the viewpoint 56 has been moved to the position at which to begin dropping the photo object 50 (S105). Specifically, whether or not any predetermined drop reference position 62 is located in the sight line direction is determined. When it is determined that the viewpoint 56 is yet to reach the position, the process at S101 is carried out again whereby the viewpoint 56 is moved further along the viewpoint path 58 by a predetermined distance. Meanwhile, when it is determined that the viewpoint 56 has reached the position at which to begin dropping the photo object 50, the three dimensional image combining and displaying unit 90 obtains the images belonging to the group, among the image groups yet to be displayed, which has the oldest image capturing date from the display target image obtaining unit 82 (S106), as well as a data set (model data and motion data) associated with that group from the data reading unit 88 (S107). The three dimensional image combining and displaying unit 90 also determines which image is to be mapped as a texture onto which photo object 50 (S108), as described above (see Figs. 8 and 9), and begins the process to move the photo object 50 according to the motion data, using the drop reference position 62 as a reference.

Thereafter, while updating the position of the viewpoint 56 (S101), an image depicting the situation of the virtual three dimensional space 54 is produced (S102), and displayed on the monitor 26. This process continues while the process begun at S109 is being carried out (S103), whereby the position of each photo object 50 in the virtual three dimensional space 54 is updated according to the motion data (S110).

According to the above-described image viewer, the images owned by the user are grouped according to the image capturing date thereof, and mapped for every group onto the respective photo objects 50 before being sequentially dropped onto the table object 52. With the above, the user can view the respective images, while realizing to which groups the respective images sequentially shown as textures of the three dimensional models belong.

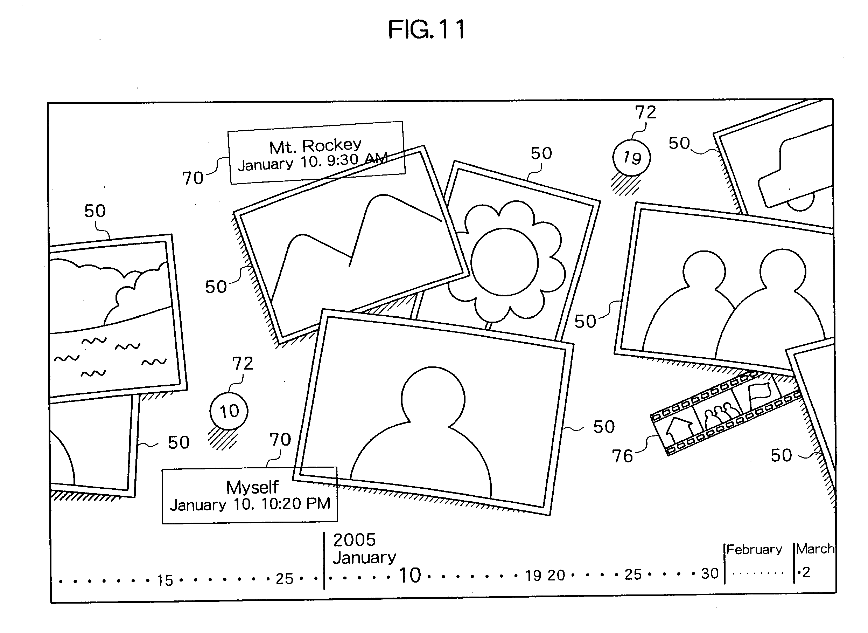

It should be noted that the present invention is not limited to the above-described embodiment, and is adapted to various modifications. For example, as shown in Fig. 11, a date gauge image 74 indicative of the image capturing dates of the images belonging to each group may be additionally shown on the monitor 26. The date gauge image 74 is an image showing the image capturing date of the photo object 50 currently shown on the monitor 26 and preceding and subsequent dates thereof, which are serially and horizontally arranged in time sequence. The image capturing date of the display target image is shown discriminated from other dates. Specifically, a specific number ("15", "25", "10", and so forth in the drawing) is shown to express an image capturing date, while mere dots ("...") are shown for the others, with no particular numbers shown. Moreover, a large-sized number is used to express the image capturing date of the photo object 50 shown in the middle of the monitor 26 so as to be discriminated from the others. The period of the dates indicated by the date gauge image 74 may be determined based on the display target image. For example, the period of the dates indicated by the date gauge image 74 may be determined such that the total number of images captured within that period is of a predetermined number or smaller, or the total image capturing dates within the period is of a predetermined number or smaller. The above-described date gauge image 74 is designed such that the image capturing date of the photo object 50 currently shown in the middle of the monitor 26 is located in the middle of the gauge. The date gauge image 74 of this design helps the user to instantly know that the image captured at which date is mapped on the photo object 50 shown on the monitor 26 or images captured at which preceding or subsequent date are available.

In addition, text data, such as a comment, an image file name, and so forth among the attribute information about the respective images may be visualized as an attribute image, and an explanation object 70 having the attribute image mapped thereon as a texture may be placed near the photo object 50 having the original image mapped thereon. Alternatively, a date object 72 indicative of an image capturing date of the images belonging to each group may be placed for that group 51.

## Claims

1. An image viewer, comprising:
image obtaining means for obtaining a plurality of images which are display targets;
grouping means for grouping the plurality of images into one or more groups;
grouped image number obtaining means for obtaining the number of images belonging to each of the groups into which the images are grouped by the grouping means;
motion data storage means for storing a plurality of motion data in association with respective different numbers of images, in which each motion data item describes motion of one or more three dimensional models in the virtual three dimensional model, onto which an image associated with the number of images associated with that motion data item is able to be mapped as a texture;
motion data reading means for selectively reading, based on the number of images belonging to each of the groups into which the images are grouped by the grouping means, one or more motion data associated with that group from the motion data storage means;
and
three dimensional image displaying means for mapping, as a texture, for every group into which the images are grouped by the grouping means, an image belonging to that group onto the three dimensional model of which motion is described by the one or more motion data associated with that group, then moving the three dimensional model having the texture mapped thereon to a position defined for that group in the virtual three dimensional space, the positions being defined for each of the respective groups so as to be apart from one another, and displaying an image of the three dimensional model.

2. The image viewer according to claim 1, wherein a total of the number of images associated with the one or more respective motion data associated with each of the groups is equal to the number of images belonging to that group.

3. The image viewer according to claim 1 or 2, wherein the grouping means groups the plurality of images into the one or more groups according to date information of the respective images.

4. The image viewer according to claim 3, wherein the three dimensional image displaying means further displays an image indicative of a date concerning an image belonging to each of the groups.

5. The image viewer according to any one of claims 1 to 4, wherein the three dimensional model onto which an image is mapped as a texture is determined according to a priority order of an image belonging to each of the groups.

6. The image viewer according to any one of claims 1 to 5, wherein
the motion data storage means stores a plurality kinds of motion data in association with the respective numbers of images, and
the motion data reading means selectively reads the one or more motion data associated with each of the groups from among the plurality kinds of motion data stored in the motion data storage means.

7. The image viewer according to claim 6, wherein the motion data reading means selects motion data according to a random number.

8. An image display method, comprising:
an image obtaining step of obtaining a plurality of images which are display targets;
a grouping step of grouping the plurality of images into one or more groups;
a grouped image number obtaining step of obtaining the number of images belonging to each of the groups into which the images are grouped at the grouping step;
a motion data reading step of selectively reading, based on the number of images belonging to each of the groups into which the images are grouped at the grouping step, one or more motion data associated with that group from motion data storage means for storing a plurality of motion data in association with respective different numbers of images, in which each motion data item describes motion of one or more three dimensional models in the virtual three dimensional model, onto which an image associated with the number of images associated with that motion data item is able to be mapped as a texture;
and
a three dimensional image displaying step of mapping, as a texture, for every group into which the images are grouped at the grouping step, an image belonging to that group onto the three dimensional model of which motion is described by the one or more motion data associated with that group, then moving the three dimensional model having the texture mapped thereon to a position defined for that group in the virtual three dimensional space, the positions being defined for each of the respective groups so as to be apart from one another, and displaying an image of the three dimensional model.

9. An information storage medium storing a program for causing a computer to function as:
image obtaining means for obtaining a plurality of images which are display targets;
grouping means for grouping the plurality of images into one or more groups;
grouped image number obtaining means for obtaining the number of images belonging to each of the groups into which the images are grouped by the grouping means;
motion data storage means for storing a plurality of motion data in association with respective different numbers of images, in which each motion data item describes motion of one or more three dimensional models in the virtual three dimensional model, onto which an image associated with the number of images associated with that motion data item is able to be mapped as a texture;
motion data reading means for selectively reading, based on the number of images belonging to each of the groups into which the images are grouped by the grouping means, one or more motion data associated with that group from the motion data storage means;
and
three dimensional image displaying means for mapping, as a texture, for every group into which the images are grouped by the grouping means, an image belonging to that group onto the three dimensional model of which motion is described by the one or more motion data associated with that group, then moving the three dimensional model having the texture mapped thereon to a position defined for that group in the virtual three dimensional space, the positions being defined for each of the respective groups so as to be apart from one another, and displaying an image of the three dimensional model.
